(19) Europäisches Patentamt
European Patent Office
Office européen des brevets

(11) EP 0 714 426 B1

(12) EUROPEAN PATENT SPECIFICATION

(45) Date of publication and mention of the grant of the patent:
**08.04.1998 Bulletin 1998/15**

(21) Application number: **94926531.8**

(22) Date of filing: **18.08.1994**

(51) Int Cl.$^6$: **C09K 3/10**, C08L 23/04

(86) International application number:
**PCT/US94/09375**

(87) International publication number:
**WO 95/05426 (23.02.1995 Gazette 1995/09)**

# (54) GASKETS MADE FROM ELASTIC SUBSTANTIALLY LINEAR OLEFIN POLYMERS

DICHTUNGEN HERGESTELLT AUS ELASTISCHEN, IM WESENTLICHEN LINEAREN OLEFIN-POLYMEREN

JOINTS D'ETANCHEITE CONSTITUES DE POLYMERES OLEFINIQUES ELASTIQUES ET SENSIBLEMENT LINEAIRES

(84) Designated Contracting States:
**AT BE CH DE DK ES FR GB GR IE IT LI LU MC NL PT SE**

(30) Priority: **18.08.1993 US 108856**

(43) Date of publication of application:
**05.06.1996 Bulletin 1996/23**

(73) Proprietor: **THE DOW CHEMICAL COMPANY
Midland, Michigan 48674 (US)**

(72) Inventors:
- **HOENIG, Steve, M.
Lake Jackson, TX 77566 (US)**
- **GREENE, Edward, E.
Midland, MI 48640 (US)**

(74) Representative:
**Weiss, Wolfgang, Dipl.-Chem. Dr. et al
Patentanwälte
Weickmann & Partner,
Kopernikusstrasse 9
81679 München (DE)**

(56) References cited:
**EP-A- 0 339 831**
**WO-A-93/08221**
**WO-A-93/13143**

- **DATABASE WPI Week 8652, Derwent Publications Ltd., London, GB; AN 86-342455 & JP,A,61 255 950 (NIPPON PETROCHEM KK) 13 November 1986**
- **DATABASE WPI Week 9206, Derwent Publications Ltd., London, GB; AN 92-045357 & JP,A,3 289 453 (YOSHINO KOGYOSHO) 19 December 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 714 426 B1

## Description

This invention relates to gaskets made from novel elastic substantially linear olefin polymers. The gaskets are capable of compression sealing various containers, without contaminating the contents. Liquid containers particularly benefit from the use of the novel-gasketing materials disclosed herein.

Gaskets have been made from a variety of structural materials, including polymers such as ethylene/vinyl acetate (EVA) and polyvinyl chloride (PVC). For example, USP 4,984,703 (Burzynski) discloses plastic closures which have a sealing liner comprising a blend of ethylene/vinyl acetate and a thermoplastic elastomeric composition.

Depending on the use environment, gaskets can have varying degrees of properties. For example, in corrosive service conditions, the gasket must be impervious to the material in question, but still resilient enough to form a seal. Gaskets used in the food and beverage area have similar requirements, but cannot contaminate the foodstuff. Furthermore, depending upon the type of food and/or liquid contents, the filling temperature might be lower or higher than room temperature, thus placing greater demands on the gasket.

Various attempts to solve these challenges usually involve the use of oil additives or elastomer additives.

For example, USP 5,137,164 (Bayer) discloses a method of lining a plastic closure to with a thermoplastic. The thermoplastic is a non-cross linked curable, vinyl chloride copolymer composition which has been plasticized with an epoxidized oil, an organic diglycidyl ether and a curing agent for the ether.

USP 4,807,772 (Schloss) and USP 4,846,362 (Schloss) disclose polypropylene and polyethylene closures, respectively, each having removable liners made from a blend of polyethylene and a thermoplastic, elastomeric copolymer (such as a block copolymer of styrene and butadiene). The blends are said to generally include 20-50 weight percent oil.

Polyethylene also has been disclosed as useful for forming gaskets, but has not been commercially successful to date, because the polymer is too "hard" and because by adding oil to reduce the hardness, the extractables increase, thus negating regulatory requirements for food contact. In addition, linear low polyethylene does not adhere well to polypropylene (which is often used as a closure material, as described in USP 4,807,772) resulting in a loose polyethylene gasket.

While there have been many different solutions to the problems of gasketing materials, most of these incorporated additives. We have now discovered substantially linear ethylene polymers useful in making gasket materials, without additives and, in the case of foodstuff, without adversely contributing to the taste and/or odor of the product.

Gaskets comprising at least one substantially linear olefin polymer have now been discovered to have these often conflicting attributes. The substantially linear olefin polymers have an unusual combination of properties, making them especially useful for gasket materials. Preferably, the substantially linear olefin polymer is an ethylene polymer.

The substantially linear ethylene polymers have the processability similar to highly branched low density polyethylene (LDPE), but the strength and toughness of linear low density polyethylene (LLDPE). However, the novel substantially linear olefin polymers are distinctly different from traditional Ziegler polymerized heterogeneous polymers (for example, LLDPE) and are also different from traditional free radical/high pressure polymerized highly branched LDPE. Surprisingly, the novel substantially linear olefin polymers are also different from linear homogeneous olefin polymers having a uniform branching distribution.

The substantially linear ethylene polymers are characterized as having various properties:

a) a melt flow ratio, $I_{10}/I_2$, $\geq 5.63$,
b) a molecular weight distribution, $M_w/M_n$, defined by the equation:

$$M_w/M_n \leq (I_{10}/I_2) - 4.63,$$

and
c) a critical shear stress at onset of gross melt fracture greater than $4 \times 10^6$ dyne /$cm^2$,
d) a critical shear rate at onset of surface melt fracture at least 50 percent greater than the critical shear rate at the onset of surface melt fracture of a linear olefin polymer having about the same $I_2$ and $M_w/M_n$ and/or
e) a processing index (PI) less than or equal to about 70 percent of the PI of a comparative linear olefin polymer at about the same $I_2$ and $M_w/M_n$.

Gaskets comprising elastic substantially linear ethylene polymers are especially preferred. A complete olefinic system (such as a gasket comprising the substantially linear ethylene polymer and a cap comprising a polyethylene or polypropylene polymer) can also be recycled together. Potential uses of the recycled polymers include melt spinning biconstituent fiber, as described in USP 5,133,917 (Jezic et al.).

The term "linear olefin polymers" used herein means that the olefin polymer does not have long chain branching. That is, the linear olefin polymer has an absence of long chain branching, as for example the traditional linear low

density polyethylene polymers or linear high density polyethylene polymers made using Ziegler polymerization processes (for example, USP 4,076,698 (Anderson et al.)), sometimes called heterogeneous polymers. The term "linear olefin polymers" does not refer to high pressure branched polyethylene, ethylene/vinyl acetate copolymers, or ethylene/vinyl alcohol copolymers which are known to those skilled in the art to have numerous long chain branches. The term "linear olefin polymers" also refers to polymers made using uniform branching distribution polymerization processes, sometimes called homogeneous polymers. Such uniformly branched or homogeneous polymers include those made as described in USP 3,645,992 (Elston), and those made using so-called single site catalysts in a batch reactor having relatively high olefin concentrations (as described in U.S. Patent 5,026,798 (Canich) or in U.S. Patent 5,055,438 (Canich)), or those made using constrained geometry catalysts in a batch reactor also having relatively high olefin concentrations (as described in U.S. Patent 5,064,802 (Stevens et al.), or in EPA 0 416 815 A2 (Stevens et al.)). The uniformly branched/homogeneous polymers are those polymers in which the comonomer is randomly distributed within a given interpolymer molecule and wherein substantially all of the interpolymer molecules have the same ethylene/comonomer ratio within that interpolymer, but these polymers too have an absence of long chain branching, as, for example, Exxon Chemical has taught in their February 1992 Tappi Journal paper.

The term "substantially linear" polymers means that the polymer backbone is substituted with 0.01 long chain branches/1000 carbons to 3 long chain branches/1000 carbons, more preferably from 0.01 long chain branches/1000 carbons to 1 long chain branches/1000 carbons, and especially from 0.05 long chain branches/1000 carbons to 1 long chain branches/1000 carbons. Similar to the traditional homogeneous polymers, the substantially linear ethylene/α-olefin copolymers of the invention have only a single melting point, as opposed to traditional Ziegler polymerized heterogeneous linear ethylene/α-olefin copolymers which have two or more melting points (determined using differential scanning calorimetry (DSC)).

Long chain branching is defined herein as a chain length of at least about 6 carbons, above which the length cannot be distinguished using $^{13}C$ nuclear magnetic resonance spectroscopy. The long chain branch can be as long as about the same length as the length of the polymer back-bone.

Long chain branching is determined by using $^{13}C$ nuclear magnetic resonance (NMR) spectroscopy and is quantified using the method of Randall (Rev. Macromol.Chem. Phys. C29 (2&3), p. 285-297).

"Melt tension" is measured by a specially designed pulley transducer in conjunction with the melt indexer. Melt tension is the load that the extrudate or filament exerts while passing over the pulley at the standard speed of 30 rpm. The melt tension measurement is similar to the "Melt Tension Tester" made by Toyoseiki and is described by John Dealy in "Rheometers for Molten Plastics", published by Van Nostrand Reinhold Co. (1982) on page 250-251. The melt tension of these new polymers is also surprisingly good, for example, as high as about 2 grams or more, especially for the substantially linear olefin polymers which have a very narrow molecular weight distribution (i.e., $M_w/M_n$ from 1.5 to 2.5).

The SCBDI (Short Chain Branch Distribution Index) or CDBI (Composition Distribution Branch Index) is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, in Wild et al, Journal of Polymer Science, Poly. Phys. Ed., Vol. 20, p. 441 (1982), or as described in U.S. Patent 4,798,081. The SCBDI or CDBI for the substantially linear olefin polymers of the present invention is preferably greater than about 30 percent, especially greater than about 50 percent.

A unique characteristic of the presently claimed polymers is a highly unexpected flow property where the $I_{10}/I_2$ value is essentially independent of polydispersity index (i.e. $M_w/M_n$). This is contrasted with conventional Ziegler polymerized heterogeneous polyethylene resins and with conventional single site catalyst polymerized homogeneous polyethylene resins having rheological properties such that as the polydispersity index increases, the $I_{10}/I_2$ value also increases.

The density of the substantially linear ethylene or ethylene/α-olefin polymers in the present invention is measured in accordance with ASTM D-792 and is generally from 0.85 grams/cubic centimeters (g/cm$^3$) to 0.93 g/cm$^3$, preferably from 0.9 g/cm$^3$ to 0.92 g/cm$^3$, and especially from 0.9 g/cm$^3$ to 0.915 g/cm$^3$.

Melting point (and Vicat softening point) of the substantially linear ethylene polymers correlates primarily with the density of the polymer since the substantially linear ethylene polymers lack a high density (i.e., linear) fraction, with some effects attributable to the molecular weight of the polymer (indicated melt index). Melting point variation of the substantially linear ethylene polymers is contrasted with heterogeneous ethylene polymers having two or more melting points (due to their broad branching distribution), one of which is about 126°C and is attributable the high density linear polyethylene fraction. The lower the density of the substantially linear ethylene polymer, the lower the melting point. For example, Table 1 lists Vicat softening point (as measured using ASTM D-1525) versus density for various substantially linear ethylene/1-octene copolymers:

Table 1

| Density ($gm/cm^3$) | Vicat Softening Point (°C) |
|---|---|
| 0.939 | 125 |
| 0.922 | 100 |
| 0.903 | 84 |
| 0.886 | 63 |
| 0.884 | 58 |
| 0.872 | 44 |

Some gaskets must withstand temperatures higher than room temperature (about 25°C) for brief times, particularly where the application is a "hot fill" application. For example, products which must undergo pasteurization must have gaskets that have melting points greater than 100°C. Thus the substantially linear ethylene polymer can be selected specifically for the application in question by selecting the appropriate density for use in the gasket environment.

The molecular weight of the substantially linear ethylene or ethylene/α-olefin polymers used in the present invention is conveniently indicated using a melt index measurement according to ASTM D-1238, Condition 190°C/2.16 kg (formally known as "Condition (E)" and also known as $I_2$). Melt index is inversely proportional to the molecular weight of the polymer. Thus, the higher the molecular weight, the lower the melt index, although the relationship is not linear. The melt index for the ethylene or ethylene/α-olefin substantially linear olefin polymers used herein is generally from 0.01 grams/10 minutes (g/10 min) to 1000 g/10 min, preferably from 1 g/10 min to 100 g/10 min, and especially from 10 g/10 min to 50 g/10 min. Molecular weight, as indicated by the melt index, will be dependent upon the shear rate necessary to process the polymer into the gasket.

Another measurement useful in characterizing the molecular weight of the substantially linear olefin polymers is conveniently indicated using a melt index measurement according to ASTM D-1238, Condition 190°C/10 kg (formerly known as "Condition (N)" and also known as $I_{10}$). The ratio of these two melt index terms is the melt flow ratio and is designated as $I_{10}/I_2$. For the substantially linear ethylene/α-olefin polymers of the invention, the $I_{10}/I_2$ ratio indicates the degree of long chain branching, i.e., the higher the $I_{10}/I_2$ ratio, the more long chain branching in the polymer. Generally, the $I_{10}/I_2$ ratio of the substantially linear ethylene/α-olefin polymers is at least about 5.63, preferably at least about 7, especially at least about 8 or above. The upper limit of the $I_{10}/I_2$ ratio can be about 50, preferably about 20, and especially about 15. For the novel substantially linear ethylene polymers, the melt flow ratio ($I_{10}/I_2$) can be increased to compensate for the use of higher molecular weight polymers (i.e., lower melt index polymers). Thus, an elastic substantially linear ethylene polymer having a melt index of about 10 grams/10 minutes, a density of about 0.92 $g/cm^3$, $M_w/M_n$ of about 2, and $I_{10}/I_2$ of about 10 will have a viscosity similar to a substantially linear ethylene polymer having a melt index of about 30 grams/10 minutes, a density of about 0.92 $g/cm^3$, $M_w/M_n$ of about 2, and $I_{10}/I_2$ of about 7.5, when using approximately the same shear rate.

Other polymers can also be combined with effective amounts of the substantially linear ethylene polymers to make the gaskets as well, depending upon the end use properties required. These other polymers are thermoplastic polymers (i.e., melt processable) and include polymers such as highly branched low density polyethylene, heterogeneously branched linear low density polyethylene, ethylene/vinyl acetate copolymers, and ethylene/acrylic acid copolymers (for example, Primacor™ Adhesive Polymers made by The Dow Chemical Company).

The gaskets made from the novel substantially linear ethylene polymers must be hard enough to withstand compression, but still soft enough such that an adequate seal is formed. Thus, the hardness of the polymer enables varying gaskets to be made, depending on the use. Hardness is measured herein as "Shore A" or "Shore D" hardness (as determined using ASTM D-2240). For the substantially linear ethylene polymers which comprise the gaskets, the Shore A hardness ranges from 70 to 100, even without the use of petroleum oils commonly included to reduce the hardness of the polymer and resulting gasket. Table 2 summarizes Shore A data versus polymer density for the substantially linear ethylene polymers used to make the gaskets:

Table 2

| Polymer Density ($g/cm^3$) | Shore A Hardness |
|---|---|
| 0.87 | 73 |
| 0.871 | 75 |
| 0.884 | 85 |

Table 2 (continued)

| Polymer Density ($g/cm^3$) | Shore A Hardness |
|---|---|
| 0.886 | 87 |
| 0.902 | 93 |
| 0.908 | 95 |
| 0.912 | 95 |
| 0.922 | 96 |
| 0.94 | 97 |

Additives such as antioxidants (for example, hindered phenolics (for example, Irganox® 1010 made by Ciba Geigy Corp.), phosphites (for example, Irgafos® 168 made by Ciba Geigy Corp.)), cling additives (for example, PIB), slip additives (for example, erucamide), antiblock additives, and pigments can also be included in the substantially linear polyethylene compositions, to the extent that they do not interfere with the enhanced properties discovered by Applicants.

The whole interpolymer product samples and the individual interpolymer samples are analyzed by gel permeation chromatography (GPC) on a Waters 150C high temperature chromatographic unit equipped with three mixed porosity columns (Polymer Laboratories $10^3$, $10^4$, $10^5$, and $10^6$), operating at a system temperature of 140°C. The solvent is 1,2,4-trichlorobenzene, from which 0.3 percent by weight solutions of the samples are prepared for injection. The flow rate is 1.0 milliliters/minute and the injection size is 200 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science Polymer Letters, Vol. 6, (621) 1968) to derive the following equation:

$$M_{polyethylene} = a * (M_{polystyrene})^b.$$

In this equation, a = 0.4316 and b = 1.0. Weight average molecular weight, $M_w$, is calculated in the usual manner according to the following formula: $M_w = \Sigma w_i^* M_i$, where $w_i$ and $M_i$ are the weight fraction and molecular weight, respectively, of the $i^{th}$ fraction eluting from the GPC column.

The molecular weight distribution ($M_w/M_n$) for the substantially linear olefin polymers of the invention is generally less than about 5, preferably from 1.5 to 2.5, and especially from 1.7 to 2.3.

The rheological processing index (PI) is measured by a gas extrusion rheometer (GER). The GER is described by M. Shida, R.N. Shroff and L.V. Cancio in Polym. Eng. Sci., Vol. 17, no. 11, p. 770 (1977), and in "Rheometers for Molten Plastics" by John Dealy, published by Van Nostrand Reinhold Co. (1982) on page 97-99. The processing index is measured at a temperature of 190°C, at nitrogen pressure of 2500 psig (17.24 MPa) using a 0.0296 inch (752 micrometers) diameter, 20:1 L/D die having an entrance angle of 180°. The GER processing index is calculated in millipoise units from the following equation:

$$PI = 2.15 \text{ X } 10^6 \text{ dynes/cm}^2/(1000 \text{ X shear rate}),$$

where: 2.15 X $10^6$ dynes/$cm^2$ is the shear stress at 2500 psi (17.24 MPa), and the shear rate is the shear rate at the wall as represented by the following equation:

$$32 Q'/ (60 \text{ sec/min})(0.745)(\text{Diameter X } 2.54 \text{ cm/in})^3,$$

where:

Q' is the extrusion rate (gms/min),
0.745 is the melt density of polyethylene ($gm/cm^3$), and
Diameter is the orifice diameter of the capillary (inches).

The PI is the apparent viscosity of a material measured at apparent shear stress of 2.15 x $10^6$ dyne/$cm^2$.

For the substantially linear olefin polymers disclosed herein, the PI is less than or equal to 70 percent of that of a comparative linear olefin polymer at about the same $I_2$ and $M_w/M_n$.

An apparent shear stress vs. apparent shear rate plot is used to identify the melt fracture phenomena. According to Ramamurthy in Journal of Rheology, 30(2), 337-357, 1986, above a certain critical flow rate, the observed extrudate irregularities may be broadly classified into two main types: surface melt fracture and gross melt fracture.

Surface melt fracture occurs under apparently steady flow conditions and ranges in detail from loss of specular gloss to the more severe form of "sharkskin". In this disclosure, the onset of surface melt fracture is characterized at the beginning of losing extrudate gloss at which the surface roughness of extrudate can only be detected by 40X magnification. The critical shear rate at onset of surface melt fracture for the substantially linear olefin polymers is at least 50 percent greater than the critical shear rate at the onset of surface melt fracture of a linear olefin polymer having about the same $I_2$ and $M_w/M_n$. Preferably, the critical shear stress at onset of surface melt fracture for the substantially linear olefin polymers of the invention is greater than 2.8 x $10^6$ dynes/$cm^2$.

Gross melt fracture occurs at unsteady flow conditions and ranges in detail from regular (alternating rough and smooth, helical, etc.) to random distortions. For commercial acceptability, (for example, in blown film products), surface defects should be minimal, if not absent. The critical shear rate at onset of surface melt fracture (OSMF) and critical shear stress at onset of gross melt fracture (OGMF) will be used herein based on the changes of surface roughness and configurations of the extrudates extruded by a GER. For the substantially linear olefin polymers of the invention, the critical shear stress at onset of gross melt fracture is preferably greater than 4 x $10^6$ dynes/$cm^2$.

Suitable constrained geometry catalysts for use herein preferably include constrained geometry catalysts as disclosed in U.S. Application Serial Nos.: 545,403, filed July 3, 1990; 758,654, filed September 12, 1991; 758,660, filed September 12, 1991; and 720,041, filed June 24, 1991. The monocyclopentadienyl transition metal olefin polymerization catalysts taught in USP 5,026,798, are also believed to be suitable for use in preparing the polymers of the present invention, so long as the polymerization conditions substantially conform to those.

The foregoing catalysts may be further described as comprising a metal coordination complex comprising a metal of groups 3-10 or the Lanthanide series of the Periodic Table of the Elements and a delocalized π-bonded moiety substituted with a constrain-inducing moiety, said complex having a constrained geometry about the metal atom such that the angle at the metal between the centroid of the delocalized, substituted π-bonded moiety and the center of at least one remaining substituent is less than such angle in a similar complex containing a similar π-bonded moiety lacking in such constrain-inducing substituent, and provided further that for such complexes comprising more than one delocalized, substituted π-bonded moiety, only one thereof for each metal atom of the complex is a cyclic, delocalized, substituted π-bonded moiety. The catalyst further comprises an activating cocatalyst.

Preferred catalyst complexes correspond to the formula:

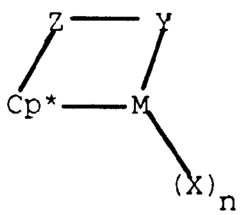

wherein:

M is a metal of group 3-10, or the Lanthanide series of the Periodic Table of the Elements;

Cp* is a cyclopentadienyl or substituted cyclopentadienyl group bound in an $\eta^5$ bonding mode to M;

Z is a moiety comprising boron, or a member of group 14 of the Periodic Table of the Elements, and optionally sulfur or oxygen, said moiety having up to 20 non-hydrogen atoms, and optionally Cp* and Z together form a fused ring system;

X independently each occurrence is an anionic ligand group or neutral Lewis base ligand group having up to 30 non-hydrogen atoms;

n is 0, 1, 2, 3, or 4 and is 2 less than the valence of M; and

Y is an anionic or nonanionic ligand group bonded to Z and M comprising nitrogen, phosphorus, oxygen or sulfur and having up to 20 non-hydrogen atoms, optionally Y and Z together form a fused ring system.

More preferably still, such complexes correspond to the formula:

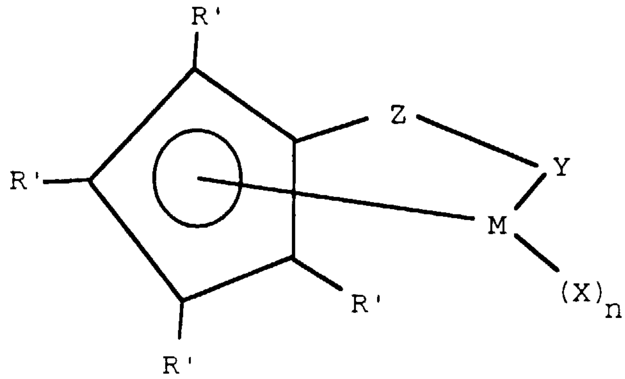

wherein:

R' each occurrence is independently selected from the group consisting of hydrogen, alkyl, aryl, silyl, germyl, cyano, halo and combinations thereof having up to 20 non-hydrogen atoms;

X each occurrence independently is selected from the group consisting of hydride, halo, alkyl, aryl, silyl, germyl, aryloxy, alkoxy, amide, siloxy, neutral Lewis base ligands and combinations thereof having up to 20 non-hydrogen atoms;

Y is -O-, -S-, -NR*-, -PR*-, or a neutral two electron donor ligand selected from the group consisting of OR*, SR*, $NR^*_2$ or $PR^*_2$;

M is as previously defined; and

Z is $SiR^*_2$, $CR^*_2$, $SiR^*_2SiR^*_2$, $CR^*_2CR^*_2$, CR*=CR*, $CR^*_2SiR^*_2$, $GeR^*_2$, BR*, $BR^*_2$; wherein

R* each occurrence is independently selected from the group consisting of hydrogen, alkyl, aryl, silyl, halogenated alkyl, halogenated aryl groups having up to 20 non-hydrogen atoms, and mixtures thereof, or two or more R* groups from Y, Z, or both Y and Z form a fused ring system; and n is 1 or 2.

It should be noted that whereas formula I and the following formulas indicate a cyclic structure for the catalysts, when Y is a neutral two electron donor ligand, the bond between M and Y is more accurately referred to as a coordinate-covalent bond. Also, it should be noted that the complex may exist as a dimer or higher oligomer.

Further preferably, at least one of R', Z, or R* is an electron donating moiety. Thus, highly preferably Y is a nitrogen or phosphorus containing group corresponding to the formula -N(R")- or -P(R")-, wherein R" is $C_{1-10}$ alkyl or aryl, i.e., an amido or phosphido group.

Most highly preferred complex compounds are amidosilane- or amidoalkanediyl- compounds corresponding to the formula:

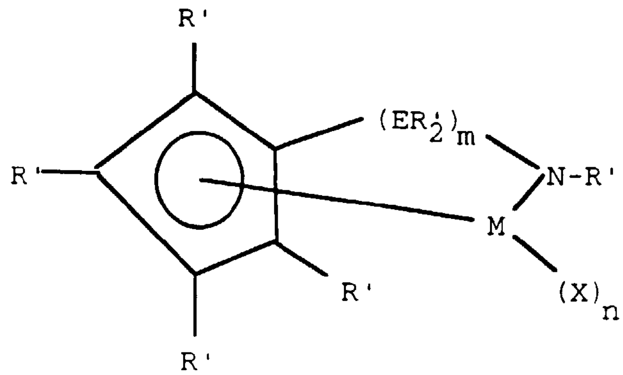

wherein:

M is titanium, zirconium or hafnium, bound in an $\eta^5$ bonding mode to the cyclopentadienyl group;

R' each occurrence is independently selected from the group consisting of hydrogen, silyl, alkyl, aryl and combinations thereof having up to 10 carbon or silicon atoms;

E is silicon or carbon;

X independently each occurrence is hydride, halo, alkyl, aryl, aryloxy or alkoxy of up to 10 carbons;

m is 1 or 2; and

n is 1 or 2.

Examples of the above most highly preferred metal coordination compounds include compounds wherein the R' on the amido group is methyl, ethyl, propyl, butyl, pentyl, hexyl, (including isomers), norbornyl, benzyl, phenyl, etc.; the cyclopentadienyl group is cyclopentadienyl, indenyl, tetrahydroindenyl, fluorenyl, octahydrofluorenyl, etc.; R' on the foregoing cyclopentadienyl groups each occurrence is hydrogen, methyl, ethyl, propyl, butyl, pentyl, hexyl, (including isomers), norbornyl, benzyl, phenyl, etc.; and X is chloro, bromo, iodo, methyl, ethyl, propyl, butyl, pentyl, hexyl, (including isomers), norbornyl, benzyl, phenyl, etc.
Specific compounds include: (tert-butylamido)(tetramethyl-$\eta^5$-cyclopentadienyl)-1,2-ethanediylzirconium dichloride, (tert-butylamido)(tetramethyl-$\eta^5$-cyclopentadienyl)-1,2-ethanediyltitanium dichloride, (methylamido)(tetramethyl-$\eta^5$-cyclopentadienyl)-1,2-ethanediylzirconium dichloride, (methylamido)(tetramethyl-$\eta^5$-cyclopentadienyl)-1,2-ethanediyltitanium dichloride, (ethylamido)(tetramethyl-$\eta^5$-cyclopentadienyl)-methylenetitanium dichloro, (tertbutylamido) dibenzyl(tetramethyl-$\eta^5$-cyclopentadienyl) silanezirconium dibenzyl, (benzylamido)dimethyl-(tetramethyl-$\eta^5$-cyclopentadienyl)silanetitanium dichloride, (phenylphosphido)dimethyl(tetramethyl-$\eta^5$-cyclopentadienyl)silanezirconium dibenzyl, (tertbutylamido)dimethyl(tetramethyl-$\eta^5$-cyclopentadienyl)silanetitanium dimethyl, and the like.

The complexes may be prepared by contacting a derivative of a metal, M, and a group I metal derivative or Grignard derivative of the cyclopentadienyl compound in a solvent and separating the salt byproduct. Suitable solvents for use in preparing the metal complexes are aliphatic or aromatic liquids such as cyclohexane, methylcyclohexane, pentane, hexane, heptane, tetrahydrofuran, diethyl ether, benzene, toluene, xylene, ethylbenzene, etc., or mixtures thereof.

In a preferred embodiment, the metal compound is $MX_{n+1}$, i.e., M is in a lower oxidation state than in the corresponding compound, $MX_{n+2}$ and the oxidation state of M in the desired final complex. A noninterfering oxidizing agent may thereafter be employed to raise the oxidation state of the metal. The oxidation is accomplished merely by contacting the reactants utilizing solvents and reaction conditions used in the preparation of the complex itself. By the term "noninterfering oxidizing agent" is meant a compound having an oxidation potential sufficient to raise the metal oxidation state without interfering with the desired complex formation or subsequent polymerization processes. A particularly suitable noninterfering oxidizing agent is AgCl or an organic halide such as methylene chloride. The foregoing techniques are disclosed in U.S. Ser. Nos.: 545,403, filed July 3, 1990 and 702,475, filed May 20, 1991, the teachings of both of which are incorporated herein by reference.

Additionally the complexes may be prepared according to the teachings of the copending United States application serial number 778,433 entitled: "Preparation of Metal Coordination Complex (I)", filed in the names of Peter Nickias and David Wilson, on October 15, 1991 and the copending United States application serial number 778,432 entitled:

"Preparation of Metal Coordination Complex (II)", filed in the names of Peter Nickias and David Devore, on October 15, 1991, and the patents issuing therefrom.

Suitable cocatalysts for use herein include polymeric or oligomeric aluminoxanes, especially methyl aluminoxane, as well as inert, compatible, noncoordinating, ion forming compounds. So-called modified methyl aluminoxane (MMAO) is also suitable for use as a cocatlyst. One technique for preparing such modified aluminoxane is disclosed in U.S. Patent 5,041,584. Aluminoxanes can also be made as disclosed in U.S. Patents Nos. 5,542,199; 4,544,762; 5,015,749; and 5,041,585. Preferred cocatalysts are inert, noncoordinating, boron compounds.

Ionic active catalyst species which can be used to polymerize the polymers described herein correspond to the formula:

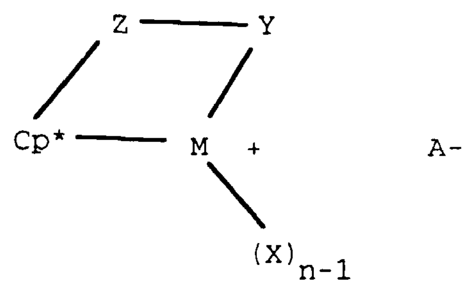

wherein:

M is a metal of group 3-10, or the Lanthanide series of the Periodic Table of the Elements;

Cp* is a cyclopentadienyl or substituted cyclopentadienyl group bound in an $\eta^5$ bonding mode to M;

Z is a moiety comprising boron, or a member of group 14 of the Periodic Table of the Elements, and optionally sulfur or oxygen, said moiety having up to 20 non-hydrogen atoms, and optionally Cp* and Z together form a fused ring system;

X independently each occurrence is an anionic ligand group or neutral Lewis base ligand group having up to 30 non-hydrogen atoms;

n is 0, 1, 2, 3, or 4 and is 2 less than the valence of M; and

A- is a noncoordinating, compatible anion.

One method of making the ionic catalyst species which can be utilized to make the polymers of the present invention involve combining:

a) at least one first component which is a mono(cyclopentadienyl) derivative of a metal of Group 3-10 or the Lanthanide Series of the Periodic Table of the Elements containing at least one substituent which will combine with the cation of a second component (described hereinafter) which first component is capable of forming a cation formally having a coordination number that is one less than its valence, and
b) at least one second component which is a salt of a Bronsted acid and a noncoordinating, compatible anion.

More particularly, the non-coordinating, compatible anion of the Bronsted acid salt may comprise a single coordination complex comprising a charge-bearing metal or metalloid core, which anion is both bulky and non-nucleophilic. The recitation "metalloid", as used herein, includes non-metals such as boron and phosphorus which exhibit semimetallic characteristics.

Illustrative, but not limiting examples of monocyclopentadienyl metal components (first components) which may be used in the preparation of cationic complexes are derivatives of titanium, zirconium, vanadium, hafnium, chromium, lanthanum, etc. Preferred components are titanium or zirconium compounds. Examples of suitable monocyclopentadienyl metal compounds are hydrocarbyl-substituted monocyclopentadienyl metal compounds such as (tert-butylamido)(tetramethyl-$\eta^5$-cyclopentadienyl)-1,2-ethanediylzirconium dimethyl, (tert-butylamido)(tetramethyl-$\eta^5$-cyclopentadienyl)-1,2-ethanediyltitanium dimethyl, (methylamido)(tetramethyl-$\eta^5$-cyclopentadienyl)-1,2-ethanediylzirconium

dibenzyl, (methylamido)(tetramethyl-$\eta^5$-cyclopentadienyl)-1,2-ethanediyltitanium dimethyl, (ethylamido)(tetramethyl-$\eta^5$-cyclopentadienyl)methylenetitanium dimethyl, (tertbutylamido)dibenzyl(tetramethyl-$\eta^5$-cyclopentadienyl) silanezirconium dibenzyl, (benzylamido)dimethyl(tetramethyl-$\eta^5$-cyclopentadienyl)silanetitanium diphenyl, (phenylphosphido) dimethyl(tetramethyl-$\eta^5$-cyclopentadienyl)silanezirconium dibenzyl, and the like.

Such components are readily prepared by combining the corresponding metal chloride with a dilithium salt of the substituted cyclopentadienyl group such as a cyclopentadienyl-alkanediyl, cyclopentadienyl--silane amide, or cyclopentadienyl--phosphide compound. The reaction is conducted in an inert liquid such as tetrahydrofuran, $C_{5-10}$ alkanes, toluene, etc. utilizing conventional synthetic procedures. Additionally, the first components may be prepared by reaction of a group II derivative of the cyclopentadienyl compound in a solvent and separating the salt by-product. Magnesium derivatives of the cyclopentadienyl compounds are preferred. The reaction may be conducted in an inert solvent such as cyclohexane, pentane, tetrahydrofuran, diethyl ether, benzene, toluene, or mixtures of the like. The resulting metal cyclopentadienyl halide complexes may be alkylated using a variety of techniques. Generally, the metal cyclopentadienyl alkyl or aryl complexes may be prepared by alkylation of the metal cyclopentadienyl halide complexes with alkyl or aryl derivatives of group I or group II metals. Preferred alkylating agents are alkyl lithium and Grignard derivatives using conventional synthetic techniques. The reaction may be conducted in an inert solvent such as cyclohexane, pentane, tetrahydrofuran, diethyl ether, benzene, toluene, or mixtures of the like.
A preferred solvent is a mixture of toluene and tetrahydrofuran.

Compounds useful as a second component in the preparation of the ionic catalysts useful in this invention will comprise a cation, which is a Bronsted acid capable of donating a proton, and a compatible noncoordinating anion. Preferred anions are those containing a single coordination complex comprising a charge-bearing metal or metalloid core which anion is relatively large (bulky), capable of stabilizing the active catalyst species (the Group 3-10 or Lanthanide Series cation) which is formed when the two components are combined and sufficiently labile to be displaced by olefinic, diolefinic and acetylenically unsaturated substrates or other neutral Lewis bases such as ethers, nitriles and the like. Suitable metals, then, include, but are not limited to, aluminum, gold, platinum and the like. Suitable metalloids include, but are not limited to, boron, phosphorus, silicon and the like. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

Highly preferably, the second component useful in the preparation of the catalysts of this invention may be represented by the following general formula:

$$(L\text{-}H)^+ [A]^-$$

wherein:

L is a neutral Lewis base;
$(L\text{-}H)^+$ is a Bronsted acid; and
$[A]^-$ is a compatible, noncoordinating anion.

More preferably $[A]^-$ corresponds to the formula:

$$[M'Q_q]^-$$

wherein:

M' is a metal or metalloid selected from Groups 5-15 of the Periodic Table of the Elements; and
Q independently each occurrence is selected from the Group consisting of hydride, dialkylamido, halide, alkoxide, aryloxide, hydrocarbyl, and substituted-hydrocarbyl radicals of up to 20 carbons with the proviso that in not more than one occurrence is Q halide and
q is one more than the valence of M'.

Second components comprising boron which are particularly useful in the preparation of catalysts of this invention may be represented by the following general formula:

$$[L\text{-}H]^+[BQ_4]^-$$

wherein:

L is a neutral Lewis base;

$[L-H]^+$ is a Bronsted acid;

B is boron in a valence state of 3; and

Q is as previously defined.

Illustrative, but not limiting, examples of boron compounds which may be used as a second component in the preparation of the improved catalysts of this invention are trialkylsubstituted ammonium salts such as triethylammonium tetraphenylborate, tripropylammonium tetraphenylborate, tris(n-butyl)ammonium tetraphenylborate, trimethylammonium tetrakis(p-tolyl)borate, tributylammonium tetrakis(pentafluorophenyl)borate, tripropylammonium tetrakis (2,4-dimethylphenyl)borate, tributylammonium tetrakis(3,5-dimethylphenyl)borate, triethylammonium tetrakis(3,5-di-trifluoromethylphenyl)borate and the like. Also suitable are N,N-dialkyl anilinium salts such as N,N-dimethyl-aniliniumtetraphenylborate, N,N-diethylanilinium tetraphenylborate, N,N-2,4,6-pentamethylanilinium tetraphenylborate and the like; dialkylammonium salts such as di-(i-propyl)ammonium tetrakis(pentafluorophenyl)borate, dicyclohexylammonium tetraphenylborate and the like; and triaryl phosphonium salts such as triphenylphosphonium tetraphenylborate, tri(methylphenyl)phosphonium tetrakis-pentafluorophenylborate, tri(dimethylphenyl)phosphonium tetraphenylborate and the like.

Preferred ionic catalysts are those having a limiting charge separated structure corresponding to the formula:

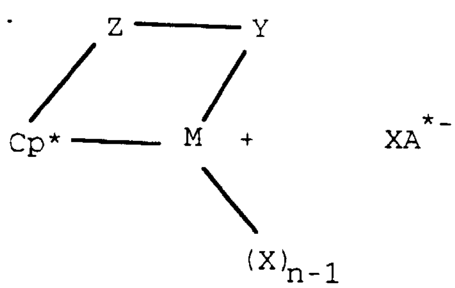

wherein:

M is a metal of group 3-10, or the Lanthanide series of the Periodic Table of the Elements;

Cp* is a cyclopentadienyl or substituted cyclopentadienyl group bound in an $\eta^5$ bonding mode to M;

Z is a moiety comprising boron, or a member of group 14 of the Periodic Table of the Elements, and optionally sulfur or oxygen, said moiety having up to 20 non-hydrogen atoms, and optionally Cp* and Z together form a fused ring system;

X independently each occurrence is an anionic ligand group or neutral Lewis base ligand group having up to 30 non-hydrogen atoms;

n is 0, 1, 2, 3, or 4 and is 2 less than the valence of M; and

$XA^{*-}$ is $^{-}XB(C_6F_5)_3$.

This class of cationic complexes may be conveniently prepared by contacting a metal compound corresponding to the formula:

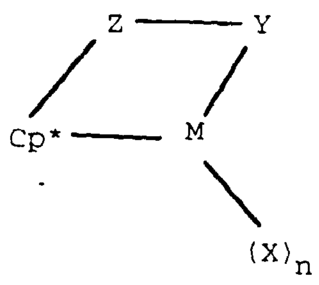

wherein:

Cp*, M, and n are as previously defined, with tris(pentafluorophenyl)borane cocatalyst under conditions to cause abstraction of X and formation of the anion $^{-}XB(C_6F_5)_3$.

Preferably X in the foregoing ionic catalyst is $C_1$-$C_{10}$ hydrocarbyl, most preferably methyl.

The preceding formula is referred to as the limiting, charge separated structure. However, it is to be understood that, particularly in solid form, the catalyst may not be fully charge separated. That is, the X group may retain a partial covalent bond to the metal atom, M. Thus, the catalysts may be alternately depicted as possessing the formula:

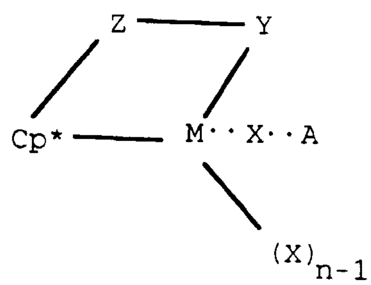

The catalysts are preferably prepared by contacting the derivative of a Group 4 or Lanthanide metal with the tris (pentafluorophenyl)borane in an inert diluent such as an organic liquid. Tris(pentafluorphenyl)borane is a commonly available Lewis acid that may be readily prepared according to known techniques. The compound is disclosed in Marks, et al. J. Am. Chem. Soc. 1991, 113, 3623-3625 for use in alkyl abstraction of zirconocenes.

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering groups.

It is believed that in the constrained geometry catalysts used herein the metal atom is forced to greater exposure of the active metal site because one or more substituents on the single cyclopentadienyl or substituted metal is both bonded to an adjacent covalent moiety and held in association with the cyclopentadienyl group through an $\eta^5$ or other $\pi$-bonding interaction. It is understood that each respective bond between the metal atom and the constituent atoms of the cyclopentadienyl or substituted cyclopentadienyl group need not be equivalent. That is, the metal may be symmetrically or unsymmetrically $\pi$-bound to the cyclopentadienyl or substituted cyclopentadienyl group.

The geometry of the active metal site is further defined as follows. The centroid of the cyclopentadienyl or substituted cyclopentadienyl group may be defined as the average of the respective X, Y, and Z coordinates of the atomic centers forming the cyclopentadienyl or substituted cyclopentadienyl group. The angle, $\Theta$, formed at the metal center between the centroid of the cyclopentadienyl or substituted cyclopentadienyl group and each other ligand of the metal complex may be easily calculated by standard techniques of single crystal X-ray diffraction. Each of these angles may increase or decrease depending on the molecular structure of the constrained geometry metal complex. Those complexes wherein one or more of the angles, $\Theta$, is less than in a similar, comparative complex differing only in the fact that the constrain inducing substituent is replaced by hydrogen, have constrained geometry for purposes of the present invention. Preferably one or more of the above angles, $\Theta$, decrease by at least 5 percent, more preferably 7.5 percent, compared to the comparative complex. Highly preferably, the average value of all bond angles, $\Theta$, is also less than in the comparative complex.

Preferably, monocyclopentadienyl metal coordination complexes of group 4 or lanthanide metals according to the present invention have constrained geometry such that the smallest angle, $\Theta$, between the centroid of the Cp* group and the Y substituent, is less than 115°, more preferably less than 110°, most preferably less than 105°, and especially less than 100°.

Other compounds which are useful in the catalyst compositions of this invention, especially compounds containing other Group 4 or Lanthanide metals, will, of course, be apparent to those skilled in the art.

The improved melt elasticity and processibility of the substantially linear polymers according to the present invention result, it is believed, from their method of production. The polymers may be produced via a continuous (as opposed to a batch) controlled polymerization process using at least one reactor, but can also be produced using multiple reactors (for example, using a multiple reactor configuration as described in USP 3,914,342) at a polymerization temperature and pressure sufficient to produce the interpolymers having the desired properties.

In polymerizing ethylene and ethylene/α-olefin copolymers, a batch reactor process typically operates at an ethylene concentration from 6.7 to 12.5 percent by weight of the reactor contents and have a polymer concentration generally less than about 5 percent by weight of the reactor contents, dependent upon the ethylene solubility, which is a function of reactor temperature and pressure.

According to one embodiment of the present process, the polymers are produced in a continuous process, as opposed to a batch process. Preferably, the polymerization temperature of the continuous process is from 20°C to 250°C, using constrained geometry catalyst technology. If a narrow molecular weight distribution polymer ($M_w/M_n$ of from 1.5 to 2.5) having a higher $I_{10}/I_2$ ratio (for example $I_{10}/I_2$ of 7 or more, preferably at least 8, especially at least 9) is desired, the ethylene concentration in the reactor is preferably not more than about 8 percent by weight of the reactor contents, especially not more than about 6 percent by weight of the reactor contents, and most especially not more than about 4 percent by weight of the reactor contents. Preferably, the polymerization is performed in a solution polymerization process. Generally, manipulation of $I_{10}/I_2$ while holding $M_w/M_n$ relatively low for producing the novel polymers described herein is a function of reactor temperature and/or ethylene concentration. Reduced ethylene concentration and higher temperature generally produces higher $I_{10}/I_2$. Generally, as the ethylene concentration of the reactor decreases, the polymer concentration increases. For the novel substantially linear ethylene/α-olefin copolymers and substantially linear ethylene homopolymers claimed herein, the polymer concentration for a continuous solution polymerization process is preferably above about 5 weight percent of the reactor contents, especially above about 6 weight percent of the reactor contents.

When using olefins other than ethylene as the primary monomer, suitable adjustments can be made regarding polymerization temperature, pressure and olefin concentration, depending on the olefin to be polymerized or copolymerized, but generally the olefin concentration is less than that normally useful in a batch reactor and the polymer concentration is higher than that normally useful in a batch reactor.

The substantially linear polymers of the present invention can be homopolymers of $C_2$-$C_{20}$ α-olefins, such as ethylene, propylene, 4-methyl-1-pentene, etc., or they can be interpolymers of ethylene with at least one $C_3$-$C_{20}$ α-olefin and/or $C_2$-$C_{20}$ acetylenically unsaturated monomer and/or $C_4$-$C_{18}$ diolefins. The substantially linear polymers of the present invention can also be interpolymers of ethylene with at least one of the above $C_3$-$C_{20}$ α-olefins, diolefins and/or acetylenically unsaturated monomers in combination with other unsaturated monomers.

Monomers usefully polymerized according to the present invention include, for example, ethylenically unsaturated monomers, acetylenic compounds, conjugated or nonconjugated dienes, polyenes, carbon monoxide, etc. Preferred monomers include the $C_2$-$C_{10}$ α-olefins especially ethylene, 1-propene, isobutylene, 1-butene, 1-hexene, 4-methyl-1-pentene, and 1-octene. Other preferred monomers include styrene, halo- or alkyl substituted styrenes, tetrafluoroethylene, vinylbenzocyclobutane, 1,4-hexadiene, and naphthenics (for example, cyclo-pentene, cyclo-hexene and cyclo-octene).

Other unsaturated monomers usefully polymerized according to the present invention include, for example, ethylenically unsaturated monomers, conjugated or nonconjugated dienes, polyenes, etc. Preferred monomers include the $C_2$-$C_{10}$ α-olefins especially ethylene, propene, isobutylene, 1-butene, 1-hexene, 4-methyl-1-pentene, and 1-octene. Other preferred monomers include styrene, halo- or alkyl substituted styrenes, tetrafluoroethylene, vinylbenzocyclobutane, 1,4-hexadiene, and naphthenics (for example, cyclopentene, cyclohexene and cyclooctene).

The polymerization conditions for manufacturing the polymers of the present invention are generally those useful in the solution polymerization process, although the application of the present invention is not limited thereto. Slurry and gas phase polymerization processes are also believed to be useful, provided the proper catalysts and polymerization conditions are employed.

Multiple reactor polymerization processes are also useful in the present invention, such as those disclosed in USP 3,914,342. The multiple reactors can be operated in series or in parallel, with at least one constrained geometry catalyst employed in at least one of the reactors.

In general, the continuous polymerization according to the present invention may be accomplished at conditions well known in the prior art for Ziegler-Natta or Kaminsky-Sinn type polymerization reactions, that is, temperatures from O to 250°C and pressures from atmospheric to 1000 atmospheres (100 MPa). Suspension, solution, slurry, gas phase or other process conditions may be employed if desired. A support may be employed but preferably the catalysts are used in a homogeneous (that is, soluble) manner. It will, of course, be appreciated that the active catalyst system, especially nonionic catalysts, form *in situ* if the catalyst and the cocatalyst components thereof are added directly to

the polymerization process and a suitable solvent or diluent, including condensed monomer, is used in said polymerization process. It is, however, preferred to form the active catalyst in a separate step in a suitable solvent prior to adding the same to the polymerization mixture.

The polymerization conditions for manufacturing the polymers of the present invention are generally those useful in the solution polymerization process, although the application of the present invention is not limited thereto. Gas phase polymerization processes are also believed to be useful, provided the proper catalysts and polymerization conditions are employed.

Gaskets can have many different forms, including "o-rings" and flat seals (for example, "film-like" gaskets having a thickness commensurate with the intended use).

Suitable end uses include beverage cap liners, hot fill juice cap liners, polypropylene cap liners, metal cap liners, high density polyethylene cap liners, window glass gaskets, sealed containers, closure caps, gaskets for medical devices, filter elements, pressure venting gaskets, hot melt gaskets, easy twist off caps, electrochemical cell gaskets, refrigerator gaskets, galvanic cell gaskets, leak proof cell gaskets, waterproofing sheet, reusable gaskets, synthetic cork like materials, thin cell electromembrane separator, magnetic rubber materials, disc gaskets for alcoholic beverage bottle caps, freeze resistant seal rings, gaskets for plastic castings, expansion joints and waters tops, corrosion-resistant conduit connectors, flexible magnetic plastics, pipe joint seals, integral weatherproof plastic lid and hinge for electrical outlets, magnetic faced foamed articles, jar rings, flexible gaskets, glass seals, tamper evident sealing liners, pressure applicators, combined bottle cap and straw structures, large condiment bottle liners, metal caps for applesauce or salsa jars, home canning jars, "crowns," and the like.

Gaskets made from the substantially linear ethylene polymers have numerous advantages, especially when used in foodstuff applications. These include: improved taste and odor over incumbent polymer gaskets such as ethylene/vinyl acetate; low adhesion to polar substrates (for example, polyethylene terephthalate, glass) which is useful for low torque removal of the closure/cap; low extractables (also useful for food-stuffs, especially regarding regulatory compliance); good adhesion to non-polar substrates (for example, polypropylene and high density polyethylene (either linear homopolymer polyethylene or linear heterogeneous high density polyethylene)); adequate oxygen, carbon dioxide and water barrier; high melting point relative to incumbent polymers (for example, ethylene/vinyl acetate); good stress crack resistance; good chemical resistance; variable hardness (useful for specific packaging which may require more or less gasket stiffness, depending on the degree of torque required to seal the container and the internal pressure of the container); and most importantly, excellent processability achieved by uniquely controlling the melt flow ratio ($I_{10}/I_2$) independently of the molecular weight distribution ($M_w/M_n$). Substantially linear ethylene polymers having $M_w/M_n$ from 1.5 to 2.5, and $I_{10}/I_2$ ratios from 7 to as high as 20 are particularly useful in these gasketing applications.

Various gasket manufacturing techniques include those disclosed in USP 5,215,587 (McConnellogue et al.); USP 4,085,186 (Rainer); USP 4,619,848 (Knight et al.); USP 5,104,710 (Knight); USP 4,981,231 (Knight); USP 4,717,034 (Mumford); USP 3,786,954 (Shull); USP 3,779,965 (Lefforge et al.); USP 3,493,453 (Ceresa et al.); USP 3,183,144 (Caviglia); USP 3,300,072 (Caviglia); USP 4,984,703 (Burzynski); USP 3,414,938 (Caviglia); USP 4,939,859 (Bayer); USP 5,137,164 (Bayer); and USP 5,000,992 (Kelch).

The gaskets claimed herein can also be made from extruded sheets or films by conventional techniques as blown, cast or extrusion coated films, followed by stamping or cutting the gasket from the sheet or film. Multilayer film structures are also suitable for making the gaskets disclosed herein, with the proviso that at least one layer (preferably the inner layer which is located adjacent to the product) comprises the substantially linear ethylene polymer. Foam multilayer gaskets comprising the substantially linear ethylene polymers are also useful in the present invention.

<u>Examples 1 and 2 and Comparative Examples 3-5</u>

Examples 1-3 and comparison examples 4-9 were tested for oxygen and water transmission. Examples 1-3 were ethylene/1-octene substantially linear polyethylenes produced by the constrained geometry catalyst technology, as described in USSN 07/776,130. Examples 1 and 2 each had a melt index of about 1 g/10 minutes and a density of about 0.902 g/cm$^3$. Example 3 had a melt index of about 1 g/10 minutes and a density of about 0.91 g/cm$^3$.

Comparison example 4 was an ethylene/acrylic acid copolymer trademarked Primacor™ 1410 and made by The Dow Chemical Company, having a melt index of about 1.5 g/10 minutes and about 9.7 percent (by weight) acrylic acid content. Comparison example 5 was a conventional heterogeneous Ziegler polymerized polymer trademarked Attane™ 4201, made by The Dow Chemical Company, and having a melt index of about 1 g/10 minutes and a density of about 0.912 g/cm$^3$. Comparison example 6 was an ethylene/1-octene polymer having a melt index of about 1 g/10 minutes and a density of about 0.9 g/cm$^3$.

Comparative examples 7 and 8 were ethylene/methacrylic acid ionomers made by DuPont. Comparative example 7 was Surlyn™ 1601, a sodium ionomer having a melt index of about 1.3 g/10 minutes. Comparative example 8 was Surlyn™ 1652, a zinc ionomer having a melt index of about 5.5 g/10 minutes.

Comparison example 9 was an ethylene/vinyl acetate copolymer trademarked Elvax™ 3128, made by DuPont,

and having a melt index of about 2 g/10 minutes and a vinyl acetate content of about 8.9 percent.

Each polymer was formed into a test film having a thickness of about 1 mil and tested twice for oxygen transmission, with the results averaged. Oxygen transmission rates were measured with a gas transmission measuring instrument (Model 1050A manufactured by Mocon, Inc. of Minnesota). The test film was stored under a nitrogen atmosphere for 24 hours prior to testing. The film was then mounted on a gas transmission cell in a standard fashion. A standard gas mixture of 3 weight percent oxygen and 97 weight percent nitrogen was used to measure the oxygen transmission rate at 24 C at 70 percent relative humidity.

Table 3 summarizes oxygen and water transmission data for examples 1-3 and comparative examples 4-9:

Table 3

| Example | $O_2$ Trans. Rate $cm^3$ mil/100 $in^2$/ day/atm ($cm^3$ mil/ 645 $cm^2$ / day/101kPa) | Water Trans. rate g mil/100 $in^2$/day (g mil/645 $cm^2$/ day) |
|---|---|---|
| 1 | 773 | 2 |
| 2 | 851 | 2.15 |
| 3 | 729 | 1.48 |
| 4* | 496 | 1.56 |
| 5* | 583 | 1.5 |
| 6* | 955 | 2.19 |
| 7* | 386 | 1.97 |
| 8* | 510 | 1.26 |
| 9* | 577 | 3.9 |

*Comparison Example Only; not an example of the invention

The data show that films (and consequently gaskets) made from the substantially linear ethylene polymers have water transmission rates rivaling that of ethylene/acrylic acid copolymers.

Examples 10 - 16

Adhesion of the substantially linear ethylene/1-octene copolymers was tested by compression sealing plaques (about 75 mils in thickness) to a series of substrates. The adhesion data was summarized below in Table 4:

Table 4

| Substrate | Adhesion |
|---|---|
| Saran™ | No adhesion |
| polypropylene | Excellent adhesion |
| polyethylene terephthalate | No adhesion |
| ethylene/vinyl alcohol | No adhesion |
| nylon | No adhesion |
| aluminum foil | No adhesion |
| polystyrene | No adhesion |

™ Trademark of The Dow Chemical Company

Example 17 and Comparison Examples 18 and 19

Shear rate and viscosity comparisons were made showing how the substantially linear ethylene polymers have lower viscosity than a comparable heterogeneous polymer, even at the same melt index and density. Shear rate and viscosity were measured using an Instron Capillary Rheometer having a die L/D of 79.7649, an entrance angle of 90°, and at a temperature of 90°C. Example 17 was a substantially linear ethylene/1-octene copolymer having a melt index of about 30 g/10 minutes, a density of about 0.913 g/$cm^3$, $M_w/M_n$ of about 2 and $I_{10}/I_2$ of about 7.5. Comparison example 18 was a heterogeneous ethylene/1-octene copolymer having a melt index of about 30 g/10 minutes, a density of about

0.917 g/cm$^3$, $M_w/M_n$ of about 3.5 and $I_{10}/I_2$ of about 6.

Comparison example 19 was an ethylene/vinyl acetate copolymer having a melt index of about 9 g/10 minutes and about 9 percent vinyl acetate content (by weight of the copolymer). Table 5 summarizes viscosity versus shear rate data for these three polymers:

Table 5

| Apparent shear rate | Ex. 17 Corrected viscosity (sec$^{-1}$) | Comp. Ex 18 Corrected viscosity (sec$^{-1}$) | Comp. Ex 19 Corrected viscosity (sec$^{-1}$) |
|---|---|---|---|
| 2.96 | 1390.61 | 1523.05 | 6953.06 |
| 7.40 | 2383.91 | 2754.74 | 8211.23 |
| 14.80 | 2450.13 | 2940.15 | 7297.40 |
| 29.60 | 2410.39 | 2847.44 | 5939.90 |
| 73.99 | 2185.34 | 2475.51 | 4296.33 |
| 147.98 | 1909.94 | 2123.99 | 3183.84 |
| 295.95 | 1618.32 | 1749.19 | 2319.01 |
| 739.89 | 1184.10 | 1241.67 | 1487.03 |
| 1479.77 | 872.58 | 872.36 | 1028.92 |
| 2959.55 | 586.11 | 551.32 | 691.99 |

As the data demonstrate, substantially linear ethylene polymers have lower viscosities than linear heterogeneous ethylene polymers and ethylene/vinyl acetate copolymers, which shows that the substantially linear ethylene polymers have improved processability, even though the substantially linear ethylene polymers have narrower molecular weight distributions than the comparative linear heterogeneous ethylene copolymers.

Various physical properties were also tested according to the following test methods: elmendorf tear: ASTM D-1922; dart impact: ASTM D-4272; tensile yield, ultimate tensile, percent elongation: ASTM D-638; puncture: obtained using an Instron tensiometer equipped with an aluminum hemispherical probe having a diameter of 12.5 mm operated at a deformation rate of 250 mm/min.

Hedonic scale represents an average of human preferences for taste and/or odor performance of a particular polymer material. The Hedonic test scale runs from 1 through 9, where 1 represents "strongly dislike" and 9 represents "strongly like" preferences, and other values between 1 and 9 represent varying degrees of preference between these two ranges. A hedonic scale rating of 5 represents a polymer which had neither a "like" nor a "dislike" rating by the human evaluators. Table 6 summarizes physical property data for example 17 and comparative example 19:

Table 6

| Test | Ex. 17 | Comp. Ex. 19 |
|---|---|---|
| Tensile Yield Strength psi (MPa) | 926 (6.38) | 756 (5.21) |
| Ultimate Tensile Strength psi (MPa) | 1915 (13.2) | 1551 (10.69) |
| Percent Elongation | 914 | 984 |
| MD Elmendorf Tear (grams) | 420 | 180 |
| CD Elmendorf Tear (grams) | 500 | 240 |
| Puncture Resistance ft. lbs/in$^3$ (J/cm$^3$) | 360 (30) | 110 (9) |
| Dart Impact (grams) | >825 | 190 |
| Hedonic Scale for odor like/dislike | 5.04 | 4.39 |

In the viscosity comparison shown in Table 5, a substantially linear ethylene/1-octene copolymer having a melt index of about 30 g/10 min is shown to have superior processability as compared to an ethylene/vinyl acetate copolymer having a melt index of about 9 g/10 min. In Table 6, it is shown that the same substantially linear ethylene/1-octene copolymer has surprisingly superior tear strength, tensile yield, ultimate tensile, puncture resistance, and dart impact strength (properties are critical to gasket integrity and performance), as compared with the same ethylene/vinyl acetate

copolymer.

Percent Hexane Extractables

Gaskets used in contact with foodstuffs (such as bottle cap liners in beverage containers) need to be effective in sealing, but also need to contribute little, if any, taste or odor to the food. One technique for qualifying the amount of potential migration of components of a gasket is determined by measuring percent hexane extractables. For example, the United States Food and Drug Administration limits the percent hexane extractables in olefin polymers used in food contact applications to a maximum of 5.5 percent.

Percent hexane extractables was measured in accordance with 21 CFR 177.1520(d)(3)(ii). This procedure involves compression molding the polymer sample into film having a thickness of about 4 mils. One inch (2.54 cm) square samples were cur from the compression molded film and 2.5 grams of the square samples were loaded into a container. Hexane was introduced into the container and the temperature was increased from room temperature to 50C. The hexane was refluxed through the container for 2 hours, at which point the polymer samples were removed. The hexane was then evaporated and the residue was weighed. The weight of the residue was then reported as percent extractables of the polymer.

In Table 7, examples 20, 22, 23, 25, 27, 29, 32, and 34 are all substantially linear ethylene/1-octene copolymers, while the comparison examples are all linear heterogeneously branched ethylene/1-octene copolymers. Table 7 summarizes $I_2$, density, $I_{10}/I_2$, and percent hexane extractables for these polymers.

Table 7

| Resin | $I_2$ (g/10 min) | Density (g/cm$^3$) | $I_{10}/I_2$ | Percent 1-octene | Percent Extractables |
|---|---|---|---|---|---|
| 20 | 1.28 | 0.8976 | 10 | 14.18 | 2.15 |
| 21* | 0.5 | 0.9017 | 14.26 | 13.48 | 23.7 |
| 22 | 27.99 | 0.9022 | N M | N M | 4.27 |
| 23 | 0.51 | 0.9023 | 11.75 | 12.55 | 0.71 |
| 24* | 1.01 | 0.9024 | 8.38 | 12.75 | 6.55 |
| 25 | 1.03 | 0.9026 | 8.91 | 11.26 | 0.62 |
| 26* | 0.79 | 0.9037 | 8.68 | 10.59 | 3.94 |
| 27 | 0.8 | 0.9038 | 9.26 | 10.32 | 0.31 |
| 28* | 0.83 | 0.9059 | 8.57 | 11.63 | 3.4 |
| 29 | 0.8 | 0.9060 | 11.56 | 10.24 | 0.57 |
| 30* | 6.01 | 0.9100 | 7.70 | 11.30 | 5.85 |
| 31* | 5.22 | 0.9106 | 7.74 | 9.46 | 4.85 |
| 32 | 6.64 | 0.9109 | 8.44 | 9.60 | 0.98 |
| 33* | 1.01 | 0.9123 | 8.17 | 9.40 | 1.54 |
| 34 | 29.3 | 0.9126 | 6.84 | 10.36 | 1.44 |
| 35* | 5.75 | 0.9129 | 7.54 | 10.56 | 4.5 |
| 36* | 25.34 | 0.9175 | 7.21 | 9.37 | 3.67 |

*Comparison Example Only; not an example of the invention
NM = Not Measured

As the data in Table 7 show, substantially linear ethylene/1-octene polymers useful in making gaskets of the present invention have very low levels of extractables when compared to linear heterogeneously branched ethylene/1-octene polymers, even at similar levels of 1-octene. For instance, example 25 and comparison example 24* both have about the same $I_2$, density, $I_{10}/I_2$, and 1-octene content, but example 25 has a level of hexane extractables which is an order of magnitude lower than comparison example 24* (0.62 percent for example 25 versus 6.55 percent for comparison example 24*). Preferably, the gaskets disclosed herein have a percent hexane extractables level of less than 5 percent, especially less than 2.5 percent, most especially less than 1 percent, to as low as 0.1 percent.

## Claims

1. A gasket comprising at least one substantially linear ethylene polymer which has from 0.01 to 3 long chain branches/1000 carbon atoms along the polymer backbone and wherein the polymer is characterized as having:

   a) a melt flow ratio, $I_{10}/I_2$, $\geq 5.63$, measured according to ASTM 1238
   b) a molecular weight distribution, $M_w/M_n$, defined by the equation:

   $$M_w/M_n \leq (I_{10}/I_2) - 4.63,$$

   and
   c) a critical shear stress at onset of gross melt fracture greater than 4 x $10^6$ dyne/$cm^2$ determined by the method diclosed in the description.

2. A gasket comprising at least one substantially linear ethylene polymer, wherein the polymer is characterized as having:

   a) a melt flow ratio, $I_{10}/I_2$, $\geq 5.63$,
   b) a molecular weight distribution, $M_w/M_n$, defined by the equation:

   $$M_w/M_n \leq (I_{10}/I_2) - 4.63,$$

   and
   c) a critical shear rate at onset of surface melt fracture at least 50 percent greater than the critical shear rate at the onset of surface melt fracture of a linear ethylene polymer having about the same $I_2$ and $M_w/M_n$.

3. The gasket of Claims 1 or 2, wherein the substantially linear ethylene polymer has from 0.01 to 1 long chain branches/1000 carbons along the polymer backbone.

4. The gasket of Claims 1 or 2 wherein the substantially linear ethylene polymer has a molecular weight distribution, $M_w/M_n$, from 1.5 to 2.5.

5. The gasket of Claims 1 or 2, wherein the substantially linear ethylene polymer is selected from the group consisting of:

   (A) a homopolymer of a $C_2$-$C_{20}$ olefin, or
   (B) an interpolymer of ethylene with at least one $C_3$-$C_{20}$ alpha-olefin, or
   (C) a copolymer of ethylene with a $C_3$-$C_{20}$ alpha-olefin.

6. The gasket of Claims 1 or 2, wherein the substantially linear ethylene polymer has a density from 0.85 g/$cm^3$ to 0.93 g/$cm^3$.

## Patentansprüche

1. Dichtung, umfassend mindestens ein im wesentlichen lineares Ethylenpolymer, welches von 0,01 bis 3 langkettige Verzweigungen/1000 Kohlenstoffatome entlang des Polymergrundgerüstes aufweist und worin das Polymer dadurch gekennzeichnet ist, daß es:

   a) ein Schmelzflußverhältnis, $I_{10}/I_2$, $\geq 5{,}63$, gemessen gemäß ASTM D 1238,
   b) eine Molekulargewichtsverteilung, $M_w/M_n$, definiert durch die Gleichung

   $$M_w/M_n \leq (I_{10}/I_2) - 4{,}63,$$

   und

c) eine kritische Scherspannung bei Beginn des Gesamtschmelzbruches größer als 4 x $10^6$ Dyne/$cm^2$, bestimmt durch das in der Beschreibung offenbarte Verfahren, aufweist.

**2.** Dichtung, umfassend mindestens ein im wesentlichen lineares Ethylenpolymer, worin das Polymer dadurch gekennzeichnet ist, daß es

a) ein Schmelzflußverhältnis, $I_{10}/I_2 \geq 5{,}63$,
b) eine Molekulargewichtsverteilung, $M_w/M_n$, definiert durch die Gleichung:

$$M_w/M_n \leq (I_{10}/I_2) - 4{,}63$$

und
c) eine kritische Scherrate bei Beginn des Oberflächenschmelzbruches, die mindestens 50 % größer ist als die kritische Scherrate bei Beginn des Oberflächenschmelzbruches eines linearen Ethylenpolymers mit etwa dem gleichen $I_2$ und $M_w/M_n$, aufweist.

**3.** Dichtung nach Anspruch 1 oder 2, worin das im wesentlichen lineare Ethylenpolymer von 0,01 bis 1 langkettige Verzweigungen/1000 Kohlenstoffatome entlang des Polymergrundgerüstes aufweist.

**4.** Dichtung nach Anspruch 1 oder 2, worin das im wesentlichen lineare Ethylenpolymer eine Molekulargewichtsverteilung, $M_w/M_n$, von 1,5 bis 2,5 aufweist.

**5.** Dichtung nach Anspruch 1 oder 2, worin das im wesentlichen lineare Ethylenpolymer ausgewählt ist aus der Gruppe bestehend aus:

(A) einem Homopolymer eines $C_2$-$C_{20}$ Olefins, oder
(B) einem Interpolymer von Ethylen mit mindestens einem $C_3$-$C_{20}$ $\alpha$-Olefin oder
(C) einem Copolymer von Ethylen mit einem $C_3$-$C_{20}$ $\alpha$-Olefin.

**6.** Dichtung nach Anspruch 1 oder 2, worin das im wesentlichen lineare Ethylenpolymer eine Dichte von 0,85 g/$cm^3$ bis 0,93 g/$cm^3$ aufweist.

## Revendications

**1.** Joint d'étanchéité comprenant au moins un polymère d'éthylène sensiblement linéaire qui a de 0,01 à 3 ramifications à longue chaîne/1 000 atomes de carbone le long du squelette polymère et dans lequel le polymère est caractérisé en ce qu'il a:

a) un rapport de fluidité à l'état fondu, $I_{10}/I_2 \geq 5{,}63$, mesuré selon la norme ASTM D 1238;
b) une polymolécularité, $M_p/M_n$ définie par l'équation:

$$M_p/M_n \leq (I_{10}/I_2) - 4{,}63;$$

et
c) une contrainte de cisaillement critique au début de la rupture de la masse fondue supérieure à 4 x $10^6$ dynes/$cm^2$, déterminée par le procédé décrit dans la description.

**2.** Joint d'étanchéité comprenant au moins un polymère d'éthylène sensiblement linéaire, dans lequel le polymère est caractérisé en ce qu'il a:

a) un rapport de fluidité à l'état fondu, $I_{10}/I_2 \geq 5{,}63$,
b) une polymolécularité, $M_p/M_n$ définie par l'équation:

$$M_p/M_n \leq (I_{10}/I_2) - 4{,}63,$$

et

c) une vitesse de cisaillement critique au début d'une rupture superficielle à l'état fondu d'au moins 50 pourcent supérieure à la vitesse de cisaillement critique au début de la rupture superficielle à l'état fondu d'un polymère oléfinique linéaire ayant environ les mêmes $I_2$ et $M_p/M_n$.

**3.** Joint d'étanchéité selon l'une des revendications 1 ou 2, dans lequel le polymère d'éthylène sensiblement linéaire possède de 0,01 à 1 ramification à longue chaine/1 000 atomes de carbone le long du squelette polymère.

**4.** Joint d'étanchéité selon l'une des revendications 1 ou 2, dans lequel le polymère d'éthylène sensiblement linéaire a une polymolécularité, $M_p/M_n$, de 1,5 à 2,5.

**5.** Joint d'étanchéité selon l'une des revendications 1 ou 2, dans lequel le polymère d'éthylène sensiblement linéaire est choisi dans le groupe formé par:

(A) un homopolymère d'une oléfine en $C_2$ à $C_{20}$; ou
(B) un interpolymère d'éthylène avec au moins une alpha-oléfine en $C_3$ à $C_{20}$; ou
(C) un copolymère d'éthylène avec une alpha-oléfine en $C_3$ à $C_{20}$.

**6.** Joint d'étanchéité selon l'une des revendications 1 ou 2, dans lequel le polymère d'éthylène sensiblement linéaire possède une masse volumique de 0,85 g/cm$^3$ à 0,93 g/cm$^3$.